Europäisches Patentamt

European Patent Office

Office européen des brevets

(11) Veröffentlichungsnummer: **0 309 614**

A1

## (12) EUROPÄISCHE PATENTANMELDUNG

(21) Anmeldenummer: 87116214.5

(22) Anmeldetag: 04.11.87

(51) Int. Cl.⁴: **B65G 1/04** , **G07F 11/62**

(30) Priorität: 01.10.87 DE 3733247

(43) Veröffentlichungstag der Anmeldung:
05.04.89 Patentblatt 89/14

(84) Benannte Vertragsstaaten:
AT BE CH DE ES FR GB IT LI LU NL SE

(71) Anmelder: GÜTERMANN & CO.,
AKTIENGESELLSCHAFT
Postfach 8023 Claridenstrasse 25
CH-8023 Zürich(CH)

(72) Erfinder: Kraske, Bernhard W.
Gutach
D-7809 Gutach-Breisgau(DE)

(74) Vertreter: Riebling, Peter, Dr.-Ing.
Patentanwalt Dr.-Ing. P. Riebling Rennerle 10
Postfach 3160
D-8990 Lindau(DE)

(54) Verkaufsständer für Nähfadenspulen und dergleichen Artikel.

(57) Beschrieben wird ein Verkaufsständer für Nähfadenspulen (5, 5') und dergleichen Artikel mit einem unteren Vorratsteil und einem darüber angeordneten Verkaufsteil, wobei ein dem Transport der Artikel (5, 5') von Vorratsteil zum Verkaufsteil bewirkender Transportschlitten (3) zweigeteilt ist derart, daß ein unterer Schlittenteil (4) den Transport der Artikel vom Vorratsteil zu einer Übergabestation (36, 37) bewirkt und der obere Schlittenteil (34) die Artikel (5, 5') in die einzelnen, nach vorne geneigten Verkaufsschächte (65) transportiert und an die Verkaufsschächte abgibt (65). Durch diese Zweiteilung des Schlittens (3) mit zwei übereinander angeordneten Schlittenteilen (4, 34), die in vertikaler Richtung unabhängig voneinander angetrieben (19, 27) und gesteuert werden können, wird insbesondere eine Positionierung des Schlittens (3) zu dem ausgewählten Verkufsschacht erreicht.

EP 0 309 614 A1

## Verkaufsständer für Nähfadenspulen und dergleichen Artikel

Die Erfindung betrifft einen Verkaufsständer für Nähfadenspulen und dergleichen Artikel mit einem unteren Vorratsteil, in dem sich in Vorratsschächten ein Vorrat der Artikel befindet und mit einem darüber angeordneten Verkaufsteil mit in Zeilen und Spalten angeordneten Verkaufsschächten für die Artikel, die zur Vorderseite hin nach unten geneigt verlaufen, an ihren Vorderseiten Entnahmeöffnungen für die Artikel haben sowie einem Transportsystem an der Rückseite des Verkaufsständers für den gesteuerten Transport der Artikel von den Vorratsschächten zu den Verkaufsschächten, das einen in horizontaler X-und in vertikaler Y-Richtung verschiebbaren Schlitten mit einer lösbaren Halterung für wenigstens einen der Artikel aufweist.

Ein derartiger Verkaufsständer ist Gegenstand der älteren Deutschen Patentanmeldung P 35 13 734.7. Der Schlitten kann dort nur als Ganzes in X- und Y-Richtung verfahren werden zwecks Übergabe der aus dem Vorratsmagazin entnommenen Artikeln zu den einzelnen Verkaufsschächten.

Dieser bekannte Verkaufsständer hat sich an und für sich bewährt. Aufgabe der Erfindung ist es aber, die Positionierung des Schlittens zu den von der Steuerung bestimmten Verkaufsschächten zu verbessern.

Zur Lösung dieser Aufgabe ist die Erfindung dadurch gekennzeichnet, daß der Schlitten aus zwei übereinander angeordneten Schlittenteilen besteht, die in vertikaler Y-Richtung getrennt voneinander und über eigene Antriebe gesteuert verfahrbar sind, wobei sich zwischen den beiden Schlittenteilen eine Übergabeeinrichtung für die Übergabe der Artikel vom unteren Schlittenteil zum oberen Schlittenteil befindet. Dadurch wird eine genauere Positionierung des Schlittens zu den ausgewählten Verkaufsschächten ermöglicht, insbesondere in vertikaler Y-Richtung. So muß für die Positionierung nur noch die fühlbar kleinere Masse des oberen Schlittenteils bewegt und richtig positioniert werden. Eventuell auftretende zeitliche Verzögerungen mit dem eingangs geschilderten System nach der älteren Patentanmeldung können ohne weiteres in Kauf genommen werden, weil ja derartige Artikel nicht ununterbrochen und in schneller Zeitabfolge verkauft werden.

Für die Übergabeeinrichtung sieht eine konstruktiv besonders einfache und dennoch zuverlässig arbeitende Ausführungsform vor, daß eine schwenkbare Klappe vorgesehen ist, die von einem Bauteil des unteren Schlittenteils verschwenkbar ist und die in der Übergabeposition eine nach vorne und unten geneigte Laufbahn für die Artikel ausbildet. Die Klappe wird also beim Verfahren des unteren Schlittenteils ohne einen gesonderten Antrieb in die Übergabeposition gebracht, so daß nur der betreffende, vom unteren Schlittenteil gegriffene Artikel - oder die von ihm gegriffenen Artikel - vom unteren Schlittenteil gelöst werden müssen. Sie gelangen dann auf die Laufbahn bzw. Rutschbahn und von dort in eine Halterung oder Aufnahme des oberen Schlittenteils, der den oder die Artikel dann in Y-Richtung nach oben in die richtige Position bringt und dann losläßt, so daß der bzw. die Artikel an den richtigen Verkaufsschacht abgegeben werden. Die richtige Positionierung hat vorher der X-Antrieb besorgt und bezüglich dieses X-Antriebsist es ausreichend, wenn hierfür nur ein einziger Antrieb an einem Hauptschlitten vorgesehen ist, der in horizontaler X-Richtung gesteuert verschiebbar ist.

Die Erfindung wird im folgenden anhand eines Ausführungsbeispiels näher erläutert, aus dem sich weitere wichtige Merkmale ergeben.

Es zeigt:

Figur 1 eine Prinzip-Skizze des neuartigen Antriebs für den erfindungsgemäßen Verkaufsständer;

Figur 2 zeigt eine Seitenansicht des Antriebes nach Figur 1;

Figur 3 zeigt die Seitenansicht des oberen Schlittens 34;

Figur 4 zeigt die Vorderansicht des Schlittens in Pfeilrichtung IV in figur 3;

Figur 5 zeigt die Draufsicht auf den Schlitten gemäss Pfeilrichtung V in Figur 4;

Figur 6 zeigt den unteren Schlitten in einer Seitenansicht;

Figur 7 zeigt den unteren Schlitten in einer Vorderansicht;

Figur 8 zeigt den unteren Schlitten in einer Draufsicht;

Figur 9 zeigt in einer Vorderansicht den rechten Teil eines Schachtes in vergrößertem Maßstab zur Erläuterung der genauen Positionierung;

Figur 10 zeigt den Schacht von Figur 9 in einer Seitenansicht.

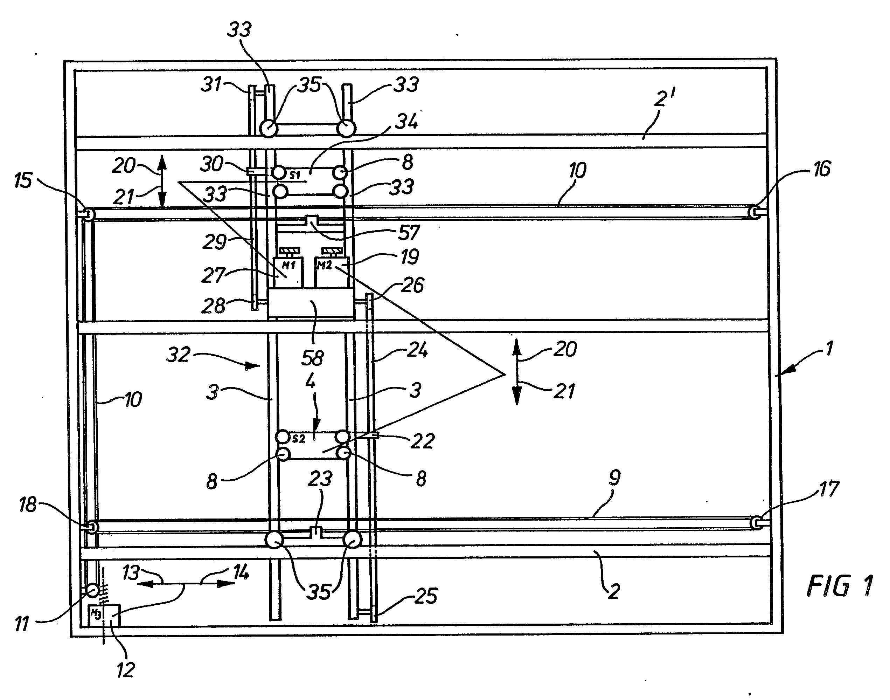

In Figur 1 ist ein etwa rechteckförmiges Gestell 1 vorgesehen mit oberen und unteren horizontalen Rahmenrohren und vertikalen Rahmenrohren, das ein rechteckförmiges Gehäuse ausbildet, dessen Kanten durch die Rahmenrohre definiert sind.

In dem Gestell 1 ist eine untere horizontale Laufschiene 2 und eine obere horizontale Laufschiene 2′ angeordnet und fest mit den seitlichen Rahmenrohren verbunden.

Im folgenden wird num der X-Antrieb in Richtung der Pfeile 13,14 für die gesamte Anordnung erläutert.

Im Gestell 1 ist ein Hauptschlitten 32 in den Pfeilrichtungen 13,14, d.h. also in X-Richtung verfahrbar und in dem Hauptschlitten 32 sind zwei getrennt voneinander bewegbare Schlitten 4,34 angeordnet, die in Y-Richtung verfahrbar sind, d.h. in Richtung der Pfeile 20,21.

Für den X-Antrieb des Hauptschlittens 32 ist in der unteren Ecke des Gestells 1 ein Antriebsmotor 12 angeordnet, der über eine Antriebsrolle 11 sowohl den oberen Teil des Hauptschlittens 32 als auch den unteren Teil des Hauptschlittens 32 synchron antreibt. Durch den synchronen Antrieb des oberen und unteren Teils des Hauptschlittens 32 werden Verkantungen des Hauptschlittens 32 vermieden. Der Hauptschlitten hat hierzu obere und untere Laufrollen 35, mit denen er auf Laufschienen 2,2' abrollt.

Zum Antrieb des Hauptschlittens 32 weist der Antriebsmotor 12 eine Antriebsrolle 11 auf, über die in vertikaler Richtung ein Zahnriemen 10 geschlungen ist, der über eine seitliche, obere Umlenkrolle 15 läuft und der an der gegenüberliegenden Gestellseite über eine weitere Umlenkrolle 16 läuft.

Der Hauptschlitten 32 weist einen etwa mittigen Mitnehmer 57 auf, mit dem er fest mit dem einen horizontalen Teil des Zahnriemens 10 verbunden ist. Hierdurch erfolgt also der obere Antrieb des Hauptschlittens 32 in X-Richtung.

Für den unteren Antrieb des Hauptschlittens 32 ist eine weitere Umlenkrolle 18 seitlich am Gestell 1 angeordnet und an der gegenüberliegenden Seite eine Umlenkrolle 17. Die Umlenkrolle 18 wird ebenfalls von der Antriebsrolle 11 des Motors 12 angetrieben.

Bei einer bevorzugten Ausführungsform ist vorgesehen, daß die Umlenkrolle 18 mit der Antriebsrolle 11 zusammenfällt, so daß sowohl die Antriebsrolle 11 als auch die Antriebsrolle 18 von dem Motor 12 angetrieben werden.

Der Antrieb des unteren Teils erfolgt über einen Zahnriemen 9, wobei der untere Teil des Hauptschlittens 32 über einen Mitnehmer 23 mit dem Zahnriemen 9 verbunden ist.

Im folgenden wird nun der Y-Antrieb für den Hauptschlitten 32 näher erläutert.

Der Hauptschlitten 32 besteht aus einem etwa H-förmigen Gestell, welches vertikale Laufschienen 3 aufweist und im Bereich der beiden parallelen, einen gegenseitigen Abstand voneinander einnehmenden Laufschienen 3 ist ein unterer, erster Schlitten 5 in Y-Richtung, d.h. also in den Pfeilrichtungen 20,21 verschiebbar und antreibbar gelagert.

Die Laufschienen 3 setzen sich nach oben fort und im oberen Teil des Hauptschlittens 32 ist ein weiterer Schlitten 34 in Y-Richtung, d.h. also in den Pfeilrichtungen 20,21 verschiebbar und antreibbar gelagert.

Im folgenden wird der Antrieb des unteren Schlittens 4 näher erläutert. Hierzu ist fest auf einem Lagerbock 58 des Hauptschlittens 32 ein erster Antriebsmotor 19 befestigt, wobei dieser Antriebsmotor über eine. Antriebsrolle 26 einen Zahnriemen 24 antreibt, der in seinem unteren Teil über eine Umlenkrolle 25 am Hauptschlitten 32 geführt ist. Der Schlitten 4 ist über einen Mitnehmer 22 mit dem Zahnriemen 24 verbunden.

Durch entsprechenden Antrieb des Motors 19 kann also damit der untere Schlitten 4 in Y-Richtung, d.h. in den Pfeilrichtungen 20,21 angetrieben werden.

Im folgenden wird der Antrieb in den Pfeilrichtungen 20,21 für den oberen Schlitten 34 erläutert.

Hierzu ist auf dem Lagerbock 58 des Hauptschlittens 32 ein weiterer Antriebsmotor 27 angeordnet, der auf eine Antriebsrolle 28 arbeitet, über die ein Zahnriemen 29 läuft, der an seinem gegenüberliegenden Ende über eine Umlenkrolle 31 am Hauptschlitten 32 umgelenkt ist. Der Schlitten 34 ist mit einem Mitnehmer 30 mit dem Zahnriemen 29 verbunden.

Durch entsprechenden Antrieb des Antriebsmotors 27 kann damit der obere Schlitten 34 in den Pfeilrichtungen 21,22 bewegt werden, wobei die Führungsrollen 8 an den zugeordneten vertikalen Laufschienen 3 abrollen.

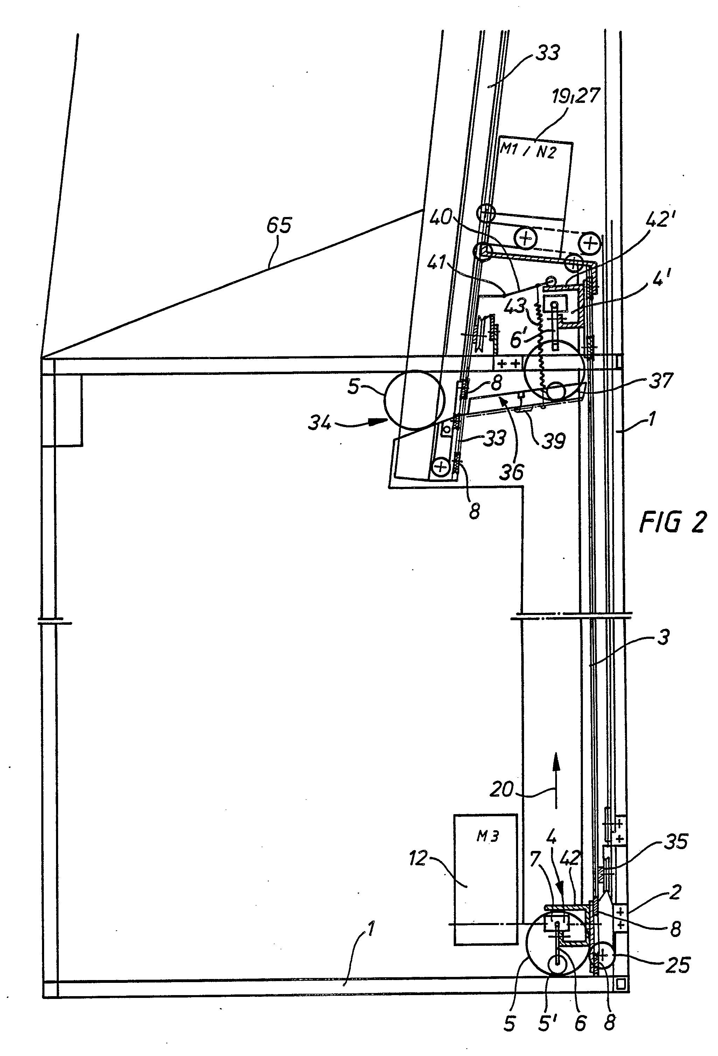

Die Laufschienen 3 des Hauptschlittens 32 erstrecken sich nur, bis zur Höhe des Lagerbockes 58, wie man dies insbesondere aus Figur 2 entnehmen kann, wobei nach vorne versetzt und schräg zu den Laufschienen 3 obere Laufschienen 33 vorgesehen sind, die die gleiche Breite wie die untere Laufschiene 3 aufweisen, die aber schräg vor die unteren Laufschienen 3 vorgesetzt sind und welche dann die Führung für des oberen Schlittens 34 übernehmen.

In Figur 2 sind weitere Einzelheiten der für den Transport in die Y-Richtung zuständigen Schlitten 4 und 34 gezeigt.

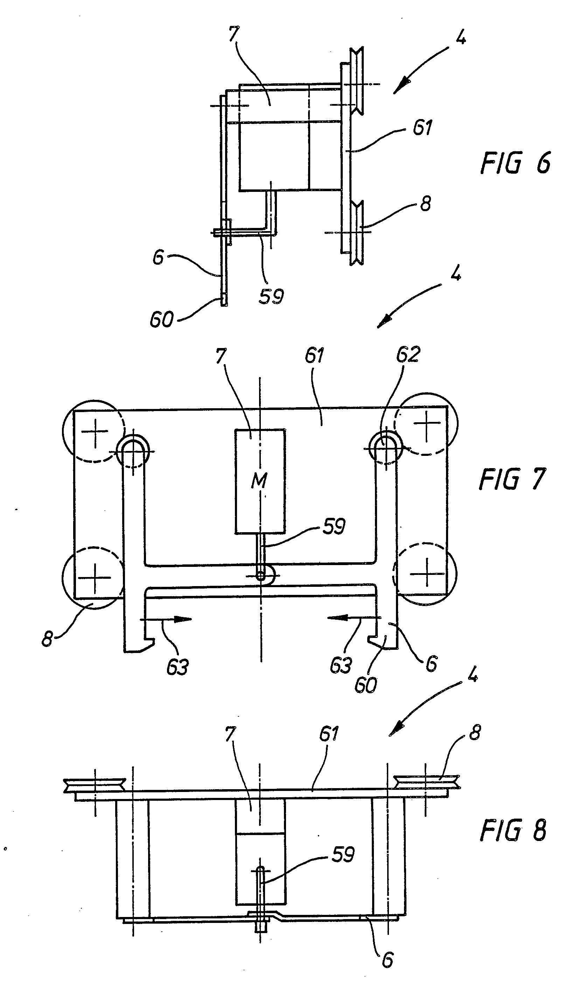

Der untere Schlitten 4 ist hierbei sowohl in der unteren Position als auch in der oberen, ausgefahrenen Position 4' dargestellt. In der unteren Position ist sichtbar, daß der Schlitten gerade aus einem nicht näher dargestellten Magazin eine Fadenrolle 5 oder bzw. eine kleinere Fadenrolle 5' aufnehmen kann und zwar mit seitlichen Greifern 6, die anhand der Fig. 6 und folgende noch beschrieben werden. Die Greifer werden über einen Elektromagneten 7 betätigt.

In den Figuren 6 - 8 ist der untere Schlitten 4 näher dargestellt. Hierbei ist erkennbar, daß auf einer Grundplatte 61 die vier Laufrollen 8 im gegenseitigen Abstand angeordnet sind.

Auf der Grundplatte 61 ist der Magnet 7 befestigt, der über einen Stift 59 gelenkig an den als Kniehebeln ausgebildeten Greifern 6 ansetzt, wobei die Greifer 6 jeweils genau gleich ausgebildet sind. Jeder Greifer 6 ist im Lagerpunkt 62 schwenkbar auf der Grundplatte 61 gelagert, und der weitere Arm des Greifers 6 ist gelenkig mit dem Stift 59 des Elektromagneten 7 verbunden.

Durch Betätigung des Elektromagneten werden also die Greifarme 60 , die an den vorderen Enden der Greifer 6 angeordnet sind, in den Pfeilrichtungen 63 zueinander bewegt.

Hierdurch ist es möglich, die in Figur 2 beispielsweise dargestellte Garnrolle 5 flanschseitig zu erfassen oder auch eine Garnrolle 5' mit kleinerem Durchmesser.

Der Schlitten 4 kann also aus seiner in Figur 2 gezeigten unteren Lage in Pfeilrichtung 20 nach oben fahren und nimmt dann seine Stellung 4' ein, wie es in Figur 2 oben dargestellt ist.

Im folgenden wird nun der obere Schlitten 34 im Hauptschlitten 32 erläutert und danach folgend wird dann die Übergabe einer Fadenrolle 5 bzw. 5' von dem unteren Schlitten 4 zu dem oberen Schlitten 34 erläutert.

Der obere Schlitten 34 ist also in dem Bereich der Laufschienen 33 in den Pfeilrichtungen 20,21 verschiebbar angetrieben, wobei der Antrieb anhand der Figur 1 bereits schon erläutert wurde.

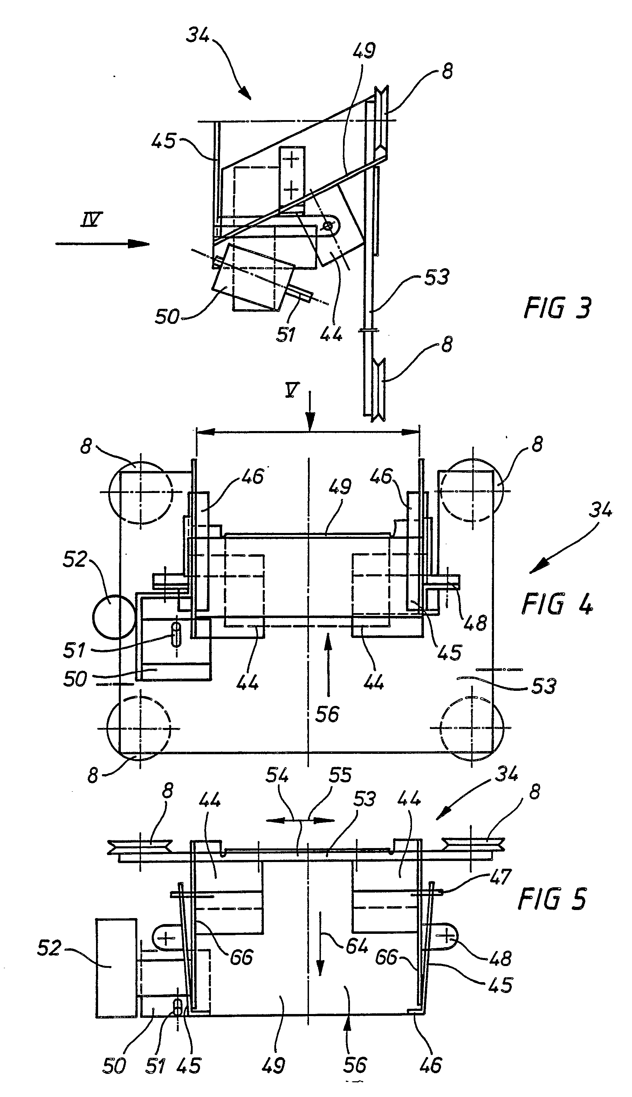

In den Figuren 3 - 5 sind weitere Einzelheiten dieses oberen Schlittens 34 zu entnehmen.

Der obere Schlitten 34 besteht aus einer Grundplatte 53, an deren vier Ecken die Führungsrollen 8 drehbar gelagert sind.

Von der Grundplatte ausgehend erstreckt sich gemäss Figur 3 eine schräg nach vorn gerichtete Laufbahn 49, in deren vorderen Bereich jeweils Abkröpfungen 46 von Anschlagklinken 45 angeordnet sind.

Jede Anschlagklinke 45 besteht aus einem abgewinkelten Hebel, der einerseits im Lagerpunkt 48 drehbar an den Seitenflächen des Schlittenteils 56 des Schlittens 34 gelagert ist und an dem andererseits schwenkbar der Anker 47 jeweils eines Elektromagneten 44 ansetzt.

Jeder Elektromagnet 44 betätigt also eine Anschlagklinke 45.

Mit synchroner Betätigung der Elektromagneten 44 werden also die Abkröpfungen 46 der Anschlagklinken 45 aus dem Bereich der Laufbahn 49 gebracht, so daß - wie später erläutert wird - eine auf die Laufbahn oben aufgelegte Garnrolle 5,5' in Pfeilrichtung 64 nach unten rollt. Sobald also die Elektromagneten 44 betätigt werden, werden die Abkröpfungen 46 aus dem Bereich der Laufbahn 49 gebracht und die Garnrolle kann dann in ein fluchtend an die Laufbahn angeschlossenes Magazin eingefüllt werden.Ein Magazin ist mit seiner unteren Laufebene bei 65 in Figur 2 angedeutet.

Im folgenden wird nun dargestellt, wie nun eine genaue Gegenüberstellung der Laufbahn 49, die von den Seitenwangen 66 begrenzt wird, zu dem jeweiligen Magazinfach erreicht wird.

Ziel dieser Positionierung ist ja, daß die Seitenwangen 66 genau zu den zugeordneten seitlichen Flächen des Magazinfaches zur Deckung gebracht werden und daß die Laufbahn 49 etwa fluchtend zur Laufbahn des Magazins 65 gebracht wird.

Wenn die Laufbahn 49 des Schlittens 34 etwas höher liegt, als die Laufbahn des Magazins 65, spielt dies weiter keine Rolle, weil nämlich die Garnrollen 5, 5' dann leicht unter Überwindung dieser kleinen Stufe auf das Magazin 65 herunterrollen.

Die seitliche Positionierung, d.h. also in X-Richtung erfolgt über die in den Figuren 3 bis 5 dargestellten weiteren Teile des Schlittens 34.

Hierzu ist an der einen Seitenfläche des Schlittenteils 56 des Schlittens 34 ein Hubmagnet 50 angeordnet, der als Anker einen Stift 51 aufweist.

Neben dem Hubmagneten 50 ist ein Geber 52 angeordnet, der entweder als magneto-resistiver Widerstand ausgebildet ist oder als induktiver Annäherungsschalter.

Zum Finden eines entsprechenden Faches, in den eine Garnrolle eingeschoben werden soll, wird nun der gesamte Hauptschlitten 32 in X-Richtung 13,14 so angetrieben, daß der gesamte Hauptschlitten unterhalb der gewählten Spalte zu liegen kommt.

Es wird dann über den Antriebsmotor 12 die ungefähr richtige Lage in Gegenüberstellung zu dem gefundenen Magzinfach gesucht. Das Magazinfach wird dadurch gefunden, daß an jeweils einer Anschlagfläche des jeweiligen Magazinfaches ein magnetisch wirksamer Stift, z.B. ein Metallstift, angeordnet ist. Dieser Metallstift wird von dem Geber 52 erkannt und es wird dann der Motor 12 gestoppt und der gesamte Schlitten 34 fährt seitlich in Pfeilrichtung 13 etwas über das Magazin hinaus, d.h. der Schlitten 34 fährt seitlich in Pfeilrichtung 13 etwas über die vom induktiven Näherungsschalter gemeldete Position hinaus. Nun wird vom Hubmagnet 50 ein mechanischer Anschlagstift 51 ausgefahren. Anschließend fährt der Schlitten 34 in Pfeilrichtung 14, wodurch der ausgefahrene Anschlagstift 51 an einer dafür vorgesehenen Fläche 71 am Rollfach zur Anlage kommt.

Der bewegliche Schlittenteil 56 wird durch diesen Vorgang an einer weiteren Bewegung in Pfeilrichtung 14 gehindert, während der Schlitten 34 noch geringfügig weiterfährt.

Diese Weiterfahrt erfolgt gegen den Widerstand einer Feder, die zwischen Schlittenteil 56 und Schlitten 34 angeordnet ist. Dadurch wird erreicht, daß der beweglich gelagerte Schlittenteil 56 mit seinem Anschlagstift 51 fest gegen die Anschlagfläche 71 des betreffenden Rollfaches gedrückt wird.

Es besteht dadurch eine exakte Flucht (in seitlicher Richtung 13 - 14) zwischen der Laufbahn des Rollfaches und der Laufbahn 49 des beweglichen Schlittenteils 56.

Eine im beweglichen Schlittenteil 56 befindliche und durch die beiden Anschlagklinken 45 und 46 gehaltene Garnrolle kann nun durch Betätigung der magneten 44 zum Abrollen in das Rollfach (Magazinfach) freigegeben werden.

Im folgenden wird nun die Übergabe einer Garnrolle 5,5' von dem unteren Schlitten 4 zu dem oberen Schlitten 34 näher erläutert. Hierzu wird auf Figur 2 Bezug genommen.

Man erkennt in Figur 2 (unten) eine obere Mitnehmerplatte 42, und wenn der Schlitten 4 aus seiner unteren Lage gemäss Figur 2 in Pfeilrichtung 20 nach oben bewegt wird, schlägt diese Mitnehmerplatte 42 an dem freien schwenkbaren Ende eines Schwenkarmes 40 an, der in einem Lager 41 schwenkbar am oberen Schlitten 34 gelagert ist. Mit dem freien schwenkbaren Ende des Schwenkarmes 40 ist eine Verbindung 43 gekoppelt, die am freien schwenkbaren Teil einer Klappe 37 ansetzt, die ihrerseits in einem Gelenk 39 an einer festen Laufbahn 36 gelagert ist, wobei diese feste Laufbahn 36 fest am Hauptschlitten 32 befestigt ist und in der in Figur 2 gezeigten herabgefahrenen Lage fluchtet die Ebene der Laufbahn 36 genau mit der oberen Kante der Laufbahn 49 des Schlittens 34.

Sobald also der Schlitten 4 hochfährt, stösst die Mitnehmerplatte 42 an dem Schwenkarm 40 an; hierdurch wird nach dem Durchfahren des Schlittens 4 in die in Figur 2 gezeigte Lage die Klappe 37 hochgezogen und nimmt die in Figur 2 gezeigte Lage an. Damit ist eine durchgehende Laufbahn, bestehend aus der Klappe 37, der Laufbahn 39 und der Laufbahn 49 des Schlittens 34 gebildet und die mit dem Greifer 6' noch festgehaltene Garnrolle 5,5' kann nun bei Lösen des Greifers 6 auf dieser Laufebene herunterrollen und landet damit in dem Schlitten 34, rollt damit in Pfeilrichtung 64 über die Laufbahn 49 und stösst an den Abkröpfungen 46 des Schlittens 34 an. Damit hat also der Schlitten die Garnrolle 5,5' übernommen und verfolgt nun die Positionierung zu einem Magazinfach, wie es vorher beschrieben wurde.

Zur Positionierung der X-Richtung werden also im Bereich der unteren Magazinreihe zunächst die Magazinreihen abgezählt, wobei der gesamte Hauptschlitten in X-Richtung verfährt, und wenn dann die richtige Magazin-Spalte gefunden wurde, wird der Y-Antrieb betätigt und es erfolgt dann das Einfüllen der in dem Schlitten 34 aufgenommenen Garnrolle in das zugeordnete Magazinfach.

Bevor aber die Rolle in das zugeordnete Magazinfach eingegeben wird, wird die Rolle entsprechend dem auf dem Flansch oder auf dem Rollenwickel aufgebrachten Code noch identifiziert, damit eine Zuordnung der richtigen Rolle zum richtigen Fach stattfinden kann. Hierzu ist in nicht näher dargestellter Weise vorgesehen, daß im Bereich des Gestells 1, und zwar im Verfahrbereich des oberen Schlittens 34 sowie des Hauptschlittens 32, ein Bar-Code-Leser vorgesehen ist, so daß also der Hauptschlitten 32 mit seinem oberen Schlitten 34 und der dort angeordneten Garnrolle erst zu dem Bar-Code-Leser hinfährt, der Bar-Code-Leser die entsprechende Spule identifiziert und entsprechend der Spulen-Identifizierung das jeweilige gewünschte Magazinfach ansteuert.

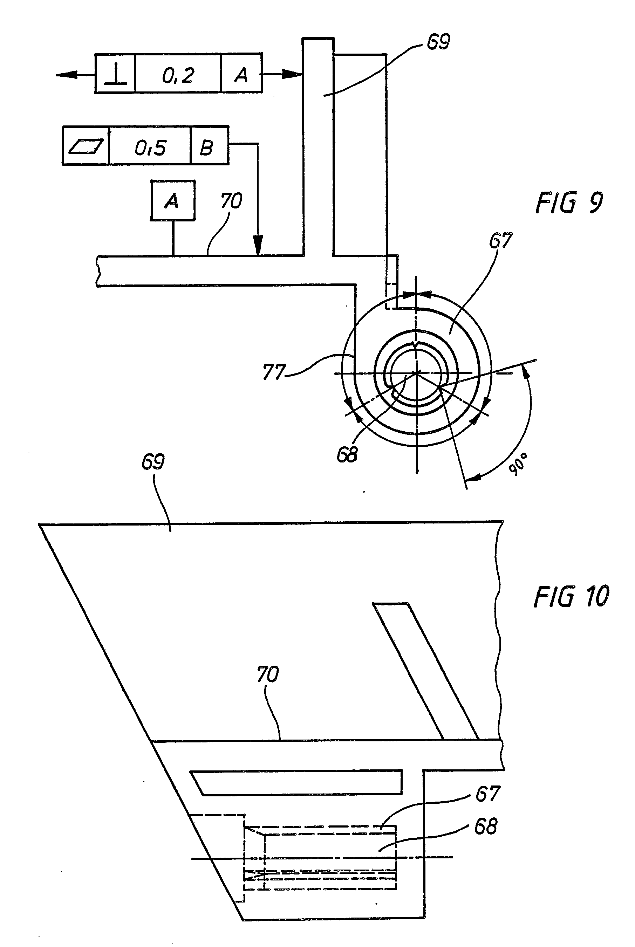

Zur genauen Positionierung des oberen Schlittens 34 in Bezug zu dem Schacht zeigt Figur 9 die rechte Schachtseitenwand 69 des Schachtes mit der Laufbahn 70 und unterhalb der rechten Schachtseitenwand eine Halterung 67, in der ein Stahlstift oder ein anderer magnetempfindlicher Stift 60 aufgenommen ist. Dieser Stift (Metallstift) ist also fest am Einfüllschacht, und zwar am hinteren unteren Ende des Einfüllschachtes befestigt. Er dient zum Auffinden des Einfüllschachtes durch den vorher beschriebenen Sensor, der am oberen Schlitten 34 befestigt ist.

Zunächst wird also der gesamte Hauptschlitten zum Auffinden eines Schachtes in X-Richtung so verfahren, daß der obere Schlitten um eine bestimmte Wegstrecke neben die Mündung des Einfüllschachtes gefahren wird, wobei gleichzeitig der Näherungssensor nun an dem magnetempfindlichen Stift am Schacht vorbeifährt und hierbei ein Signal abgibt, welches den Antriebsmotor 13 für den X-Antrieb stillsetzt und gleichzeitig umpolt, daß dieser innerhalb von einer kürzen Wegstrecke abgebremst wird. Die Elektronik weiß nun, daß dieser Antriebsmotor um einen bestimmten Betrag zu weit über den Schacht hinausgefahren ist. Die Elektronik befiehlt also dem Antriebsmotor, um diesen Betrag zuzüglich einem Sicherheitsabstand in die andere Richtung zu fahren um entsprechende Toleranzen auszugleichen. Wie bereits erwähnt, kommt jetzt der ausgefahrene Anschlagstift 51 an der Fläche 71 am Rollfach zur Anlage.

Nachdem aus Sicherheitsgründen, um entsprechende Toleranzen auszugleichen, dem Schrittmotor ein größerer Antriebsweg vorgegeben wurde, als tatsächlich zur Verfügung steht, weil bereits schon nach einem kürzeren Weg der mechanische Anschlag zur Anlage kommt, ist vorgesehen, daß der Schlitten den Schlittenteil 56 aufweist, der verschiebbar an der Grundplatte des Schlittens 34 befestigt ist und der Schlittenteil 56 schlägt also jetzt mit dem daran befestigten mechanischen Anschlag an der Seitenwand des Einfüllschachtes auf und der gesamte andere Teil des Schlittens 34 fährt dann noch um die kurze Verschiebungsstrecke, wie sie in den Zeichnungen dargestellt ist, in X-Richtung (Pfeilrichtung 14) weiter und erst dann wird der Antriebsmotor 13 abgebremst.

Diese spezielle Positionierung des Scchlittens hat den Vorteil, daß man eine aufwendige Suchelektronik einspart und doch eine ausgezeichnete Zuordnung des Schlittens zum Einfüllschacht über den mechanischen Anschlag erreicht, ohne daß der mechanische Anschlag selbst oder der Antriebsmotor durch Auffahren auf eine mechanische Bremse überlastet wird.

Es ist somit ersichtlich, daß der obere Schlittenteil auf den entsprechenden horizontalen Laufschienen gelagert ist, nämlich unten, in der Mitte etwa unterhalb der Antriebsmotoren für den Y-Antrieb und ganz oben am Gestell, so daß auch hier eine ausgezeichnete Parallelführung erreicht wird.

Außerdem wird ein synchroner Antrieb des unteren und des oberen Teils des oberen Schlittenteils erreicht und damit eine eventuelle Verkantung auf jeden Fall vermieden.

Die Übergabe der Artikel vom unteren zum oberen Schlittenteil erfolgt also so, daß reihenweise Magazine im unteren Teil des Verkaufsständers angeordnet sind und jedes Magazin weist an seiner Unterseite eine Wanne auf - zeichnerisch nicht dargestellt -. Jeweils eine der Garnspulen oder anderen Artikel rollt aus dem Magazin heraus und kommt in der Wanne zu liegen. Der betreffende Artikel wird dann vom unteren Schlittenteil aufgenommen, wie beschrieben. Er wird dann vom Magazin weggefahren und zwar entweder direkt in Y-Richtung hochgefahren oder auch in X-Richtung seitlich. Beim Hochfahren wird die Klappe betätigt, die dann eine schräge Ablaufbahn nach vorne bildet und der Artikel wird dann an den oberen Schlittenteil übergeben. Hierzu wird der Elektromagnet des unteren Schlittenteils ausgeklingt oder stromlos gemacht. Dadurch werden die Haken, die den Artikel gehalten haben, auseinanderbewegt und der Artikel rollt über die Schräge nach vorne in die Aufnahme des oberen Schlittenteils, der elektromagnetisch betätigbare Anschläge hat, die jetzt geschlossen sind und der Artikel halten. Der obere Schlittenteil ist also der eigentliche Transportschlitten, der die Übergabe in das jeweilige Fach vornimmt und an diesem zweiten Schlitten ist der elektromagnetisch betätigbare Anschlag vorgesehen und der magneto-resistive Widerstand, der vorstehend beschrieben wurde.

Zeichnungslegende

1 Gestell
2 + 3 Laufschiene
4 Schlitten
5 Fadenrolle "5"
6 Griefer
7 Elektromagnet
8 Führungsrolle
9 Zahnriemen
10 Zahnriemen
11 Antriebsrolle
12 Motor
13 Pfeilrichtung
14 Pfeilrichtung
15 Umlenkrolle
16 Umlenkrolle
17 Umlenkrolle
18 Umlenkrolle
19 Motor
20 Pfeilrichtung
21 Pfeilrichtung
22 Mitnehmer
23 Mitnehmer
24 Zahnriemen
25 Umlenkrolle
26 Antriebsrolle
27 Motor
28 Antriebsrolle
29 Zahnriemen
30 Mitnehmer
31 Umlenkrolle
32 Hauptschlitten
33 Laufschiene
34 Schlitten
35 Laufrolle
36 Laufbahn
37 Klappe
38 Feder
39 Gelenk
40 Schwenkarm
41 Lager
42 Mitnehmerplatte
43 Verbindung
44 Magnet (Anschlag 45)
45 Anschlagklinke
46 Abkröpfung
47 Anker
48 Lagerpunkt
49 Laufbahn
50 Hubmagnet
51 Stift
52 Geber
53 Grundplatte
54 Pfeilrichtung
55 Pfeilrichtung
56 Schlittenteil
57 Mitnehmer
58 Lagerbock
59 Stift
60 Greifarm
61 Grundplatte

62 Lagerpunkt
63 Pfeilrichtung
64 pfeilrichtung
65 Magazin
66 Seitenwange
67 Halterung
68 Stift
69 Seitenwand
70 Laufbahn
71 Anschlagsfläche

**Ansprüche**

1. Verkaufsständer für Nähfadenspulen und dergleichen Artikel mit einem unteren Vorratsteil, in dem sich in Vorratsschächten ein Vorrat der Artikel befindet und mit seinem darüber angeordneten Verkaufsteil mit in Zeilen und Spalten angeordneten Verkaufsschächten für die Artikel, die zur Vorderseite hin nach unten geneigt verlaufen, an ihren Vorderseiten Entnahmeöffnungen für die Artikel und an ihren Rückseiten Einfüllöffnungen für die Artikel haben sowie mit einem Transportsystem an der Rückseite des Verkaufsständers für den gesteuerten Transport der Artikel von den Vorratsschächten zu den Verkaufsschächten, das einen in horizontaler X- und in vertikaler Y-Richtung verschiebbaren Schlitten mit einer lösbaren Halterung für wenigstens einen der Artikel aufweist, **dadurch gekennzeichnet,** daß der Schlitten (32) aus zwei übereinander angeordneten Schlittenteilen (4,34) besteht, die in vertikaler Y-Richtung getrennt voneinander und über eigene Antriebe gesteuert verfahrbar, wobei sich zwischen den beiden Schlittenteilen (4,34) eine Übergabeeinrichtung (36,37) für die Übergabe der Artikel (5,5') 'vom unterem Schlittenteil (4) zum oberen Schlittenteil (34) befindet.

2. Verkaufsständer nach Anspruch 1, **dadurch gekennzeichnet,** daß die Übergabeeinrichtung eine schwenkbare Klappe (37) aufweist, die von einem Bauteil (42) des unteren Schlittenteils (4) verschwenkbar ist und die in der Übergabeposition eine nach vorne und unten geneigte Laufbahn (36) für die Artikel (5,5') ausbildet.

3. Verkaufsständer nach Anspruch 1 oder Anspruch 2, **dadurch gekennzeichnet,** daß beide Schlittenteile (4,34) Teile eines gemeinsamen Hauptschlittens (32) sind, der in horizontaler X-Richtung gesteuert verschiebbar ist.

FIG 1

EP 0 309 614 A1

G 1144

FIG 2

G 1144

EP 0 309 614 A1

FIG 3

FIG 4

FIG 5

G 1144

FIG 6

FIG 7

FIG 8

G 1144

FIG 9

FIG 10

G 1144

Europäisches
Patentamt

**EUROPÄISCHER RECHERCHENBERICHT**

Nummer der Anmeldung

EP 87 11 6214

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 513 734 (GÜTERMANN & CO. AG) <br> * Insgesamt * <br> --- | 1,2 | B 65 G 1/04 <br> G 07 F 11/62 |
| A | EP-A-0 091 058 (MAATEL S.A.) <br> * Seite 5, Zeile 26 - Seite 6, Zeile 13; Figuren * <br> ----- | 1 | |
| | | | **RECHERCHIERTE SACHGEBIETE (Int. Cl.4)** <br><br> B 65 G <br> G 07 F |

Der vorliegende Recherchenbericht wurde für alle Patentansprüche erstellt

| Recherchenort | Abschlußdatum der Recherche | Prüfer |
|---|---|---|
| DEN HAAG | 20-12-1988 | VAN ROLLEGHEM F.M. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
   Dokument

EPO FORM 1503 03.82 (P0403)